# DEMANDE DE BREVET EUROPEEN

(11) **EP 4 484 017 A1**
(43) Date de publication de la demande: **01.01.2025**
(21) Numéro de dépôt: 24183241.9
(22) Date de dépôt: 19.06.2024
(51) Int. Cl.: B05B 16/40, B05B 16/60, B05B 16/80, B64F 5/10

(54) **INSTALLATION DE PEINTURE D'UN AÉRONEF COMPORTANT UNE CABINE DE PEINTURE DE SECTION TRANSVERSALE RÉDUITE**

(30) Priorité: 26.06.2023 FR 2306619
(71) Demandeur: Airbus SAS, 31700 Blagnac Cedex (FR); Airbus Operations S.L., 28906 Getafe (ES); AIRBUS Operations GmbH, 21129 Hamburg (DE)
(72) Inventeur: LAGUTIN, Wladislav, 21129 HAMBURG (DE); GARCIA AMADO, Juan Francisco, 28906 GETAFE (ES); MORINIERE, Boris, 17300 ROCHEFORT (FR)
(74) Mandataire: Fantin, Laurent

(57) **Abrégé**

L'invention a pour objet une installation de peinture, adaptée pour peindre un fuselage d'un aéronef, comportant une cabine de peinture (20) positionnée sur une plate-forme (S). Cette cabine de peinture (20) comprend au moins des première et deuxième ouvertures latérales (22.1) configurées pour permettre aux ailes (14) de l'aéronef de traverser la cabine de peinture (20) ainsi qu'au moins deux éléments (56, 58, 60, 62) dont au moins un est mobile entre une position rapprochée, correspondant à un état fermé de la cabine de peinture (20) dans laquelle les deux éléments (56, 58, 60, 62) sont jointifs ainsi qu'une position écartée correspondant à un état ouvert de la cabine de peinture (20) dans laquelle le fuselage (12) peut être positionné entre les deux éléments (56, 58, 60, 62).

## Description

La présente demande se rapporte à une installation de peinture d'un aéronef comportant une cabine de peinture de section transversale réduite.

Selon un mode de réalisation, un aéronef comprend un fuselage, des ailes disposées de part et d'autre du fuselage ainsi qu'un empennage positionné au niveau de la pointe arrière du fuselage.

Une fois assemblé, l'aéronef est positionné dans un bâtiment de peinture sensiblement parallélépipédique et dimensionné pour contenir l'aéronef afin d'y être poncé puis peint. Compte tenu des dimensions de l'empennage et des ailes, le plafond et les parois latérales du bâtiment sont éloignés du fuselage.

L'opération de ponçage de l'aéronef génère de fines particules qui restent en suspension autour de l'aéronef et/ou se déposent sur le sol, les surfaces de l'aéronef et/ou du bâtiment. Lors de l'opération de peinture, ces fines particules peuvent revenir en suspension et se déposer sur les surfaces fraîchement peintes de l'aéronef. En parallèle, la peinture étant appliquée par pulvérisation sur les surfaces de l'aéronef, une partie de cette peinture pulvérisée n'est pas déposée sur les surfaces de l'aéronef et génère un nuage de peinture. Pour limiter le dépôt de la peinture sur les parois et plafond du bâtiment de peinture, ce dernier est équipé d'au moins un système de ventilation et d'extraction comportant au moins une bouche de ventilation configurée pour injecter un flux d'air dans le bâtiment de peinture ainsi qu'une bouche d'extraction configurée pour extraire l'air présent dans le bâtiment de peinture. Compte tenu des dimensions importantes du bâtiment de peinture, le fonctionnement du système de ventilation et d'extraction est énergivore en raison du volume important à traiter.

Selon une autre problématique, après son application, la peinture est séchée lors d'une étape de séchage qui requiert un maintien de la température à une valeur donnée à l'intérieur du bâtiment. Compte tenu du volume d'air présent dans le bâtiment, ce maintien en température est énergivore.

La présente invention vise à remédier à tout ou partie des inconvénients de l'art antérieur. A cet effet, l'invention a pour objet une installation de peinture adaptée pour peindre un fuselage d'un aéronef, l'aéronef comportant des ailes et un empennage, chaque aile formant un angle donné avec le fuselage, l'installation de peinture comportant une plate-forme. Selon l'invention, l'installation de peinture comprend une cabine de peinture, positionnée sur la plate-forme, comportant au moins des première et deuxième ouvertures latérales configurées pour permettre aux ailes de l'aéronef de traverser la cabine de peinture ainsi qu'au moins deux éléments, au moins l'un des deux éléments étant mobile entre une position rapprochée, correspondant à un état fermé de la cabine de peinture dans laquelle les deux éléments sont jointifs ainsi qu'une position écartée, correspondant à un état ouvert de la cabine de peinture dans laquelle le fuselage peut être positionné entre les deux éléments. Cette solution permet d'obtenir une cabine de peinture de petites sections ajustées à celles du fuselage, ce qui permet de réduire le volume d'air à traiter par un système de ventilation et d'extraction ou à chauffer pour le séchage de la peinture. Ainsi, il est possible de réduire la consommation d'énergie de simplifier et d'optimiser la gestion des caractéristiques (température, hygrométrie, qualité, ...) de l'air.

Selon une autre caractéristique, la cabine de peinture comprend une ouverture supérieure dimensionnée pour permettre à l'empennage de traverser la cabine de peinture.

Selon une autre caractéristique, la cabine de peinture comprend au moins des première et deuxième parties, la première partie comportant au moins une partie d'une première paroi latérale ainsi qu'une première portion d'une paroi supérieure, la deuxième partie comportant au moins une partie d'une deuxième paroi latérale ainsi qu'une deuxième portion de la paroi supérieure, les première et deuxième portions de la paroi supérieure étant jointives lorsque les première et deuxième parties sont dans la position rapprochée, les première et deuxième portions de la paroi supérieure comprenant des découpes de manière à former l'ouverture supérieure lorsque les première et deuxième parties sont dans la position rapprochée. Selon une autre caractéristique, les première et deuxième parties sont mobiles entre les positions rapprochée et écartée et symétriques par rapport à un plan médian vertical.

Selon une autre caractéristique, l'installation de peinture comprend, pour chacune des première et deuxième parties, au moins une liaison glissière reliant la première ou deuxième partie et la plate-forme et configurée pour permettre à la première ou deuxième partie (de se translater entre les positions rapprochée et écartée, chaque liaison glissière formant avec le plan médian vertical un angle sensiblement égal à celui formé entre le fuselage et chaque aile. Selon une autre caractéristique, la cabine de peinture comprend des premier et deuxième tronçons comportant respectivement des première et deuxième faces terminales positionnées dans des plans transversaux perpendiculaires au plan médian vertical, au moins un des premier et deuxième tronçons étant mobile entre une première position dans laquelle les première et deuxième faces transversales sont plaquées l'une contre l'autre ainsi qu'une deuxième position dans laquelle les première et deuxième faces transversales sont écartées. Selon une autre caractéristique, le premier tronçon est fixe. En complément, le deuxième tronçon comprend les première et deuxième parties mobiles entre une position écartée du plan médian vertical et une position rapprochée du plan médian vertical.

Selon une autre caractéristique, le premier tronçon comprend les première et deuxième ouvertures latérales débouchant au niveau de la première face terminale.

Selon une autre caractéristique, la cabine de peinture comprend au moins une barrière souple configurée pour combler un espace entre la cabine de pilotage et l'empennage, et totalement obturer l'ouverture supérieure.

Selon une autre caractéristique, pour au moins une des première et deuxième ouvertures latérales, la cabine de peinture comprend au moins une barrière souple configurée pour combler un espace entre la cabine de peinture et l'aile, et ainsi totalement obturer la première ou deuxième ouverture latérale.

Selon une autre caractéristique, la cabine de peinture comprend une structure configurée pour supporter des parois ainsi que plusieurs glissières longitudinales solidaires de la structure, parallèles entre elles et configurées pour permettre à au moins un support de se déplacer le long du fuselage positionné dans la cabine de peinture en coulissant le long de la glissière.

D'autres caractéristiques et avantages ressortiront de la description de l'invention qui va suivre, description donnée à titre d'exemple uniquement, en regard des dessins annexés parmi lesquels :
- La figure 1 est une vue en perspective selon un premier angle de vue d'une installation de peinture, comportant une cabine de peinture à l'état ouvert, illustrant un mode de réalisation de l'invention,
- La figure 2 est une vue en perspective selon un deuxième angle de vue de l'installation de peinture visible sur la figure 1,
- La figure 3 est une vue en perspective d'une structure d'une cabine de peinture, à l'état ouvert, illustrant un mode de réalisation de l'invention,
- La figure 4 est une vue en perspective de la structure de la cabine de peinture visible sur la figure 3 à l'état fermé,
- La figure 5 est une vue arrière d'une installation de peinture illustrant un mode de réalisation de l'invention,
- La figure 6 est une vue en perspective d'une partie d'une structure d'une cabine de peinture illustrant un mode de réalisation de l'invention,
- La figure 7 est une vue en perspective d'une partie d'une structure d'une cabine de peinture illustrant un mode de réalisation de l'invention,
- La figure 8 est une vue en perspective d'une partie inférieure d'une cabine de peinture équipée de bouches d'extraction illustrant un mode de réalisation de l'invention,
- La figure 9 est une représentation schématique latérale d'un système de ventilation et d'extraction illustrant un mode de réalisation de l'invention,
- La figure 10 est une représentation schématique en perspective d'un système de ventilation et d'extraction illustrant un mode de réalisation de l'invention,
- La figure 11 est une vue en perspective d'une partie d'un système de ventilation et d'extraction comportant des bouches d'extraction mobiles, en position rétractée sur la partie (A) et en position déployée sur la partie (B), illustrant un mode de l'invention.

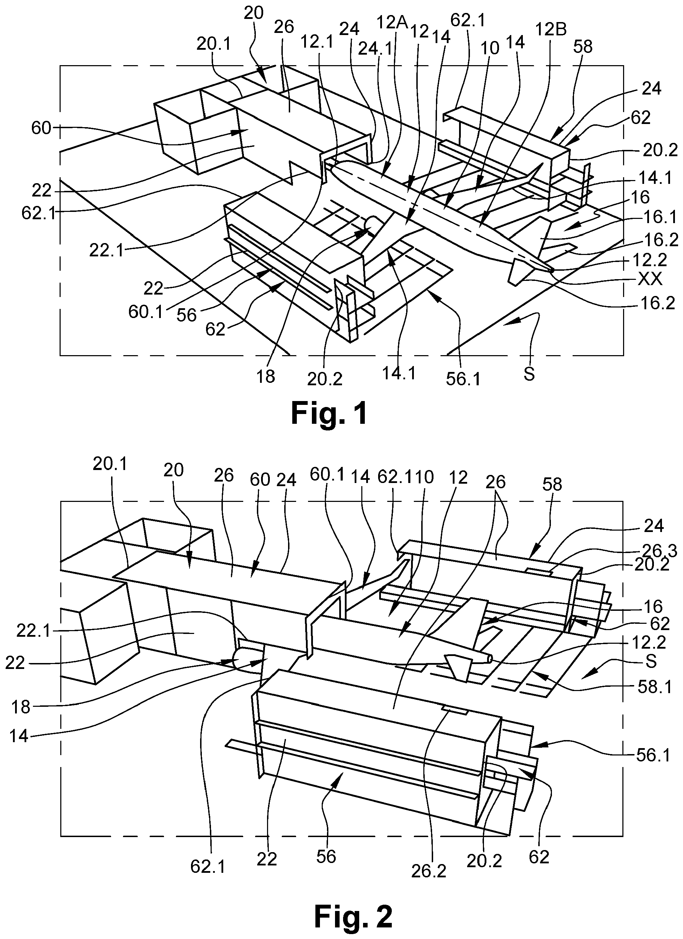

Selon un mode de réalisation visible sur la figure 1, un aéronef 10 comprend un fuselage 12 qui s'étend entre une pointe avant 12.1 et une pointe arrière 12.2, des ailes 14 qui s'étendent de part et d'autre du fuselage 12 ainsi qu'un empennage 16, positionné au niveau de la pointe arrière 12.2, comportant une partie verticale 16.1 ainsi que des parties horizontales 16.2 situées de part et d'autre de la pointe arrière 12.2. L'aéronef 10 présente un axe longitudinal aéronef XX qui est horizontal lorsque l'aéronef 10 est au sol et passe par les pointes avant et arrière 12.1, 12.2.

Le fuselage 12 présente une longueur correspondant à une dimension du fuselage 12 prise horizontalement de la pointe avant 12.1 à la pointe arrière 12.2 ainsi qu'une largeur correspondant à une dimension du fuselage 12 prise horizontalement dans un plan transversal perpendiculaire à l'axe longitudinal aéronef XX. Le fuselage 12 présente une partie avant 12A située à l'avant des ailes 14 ainsi qu'une partie arrière 12B située à l'arrière des ailes 14. Chaque aile 14 comprend un bord de fuite 14.1 et forme avec le fuselage 12 un angle donné, cet angle étant mesuré entre le bord de fuite 14.1 et le fuselage 12.

L'aéronef 10 comprend des ensembles de propulsion 18 reliés aux ailes 14 et espacés du fuselage 12.

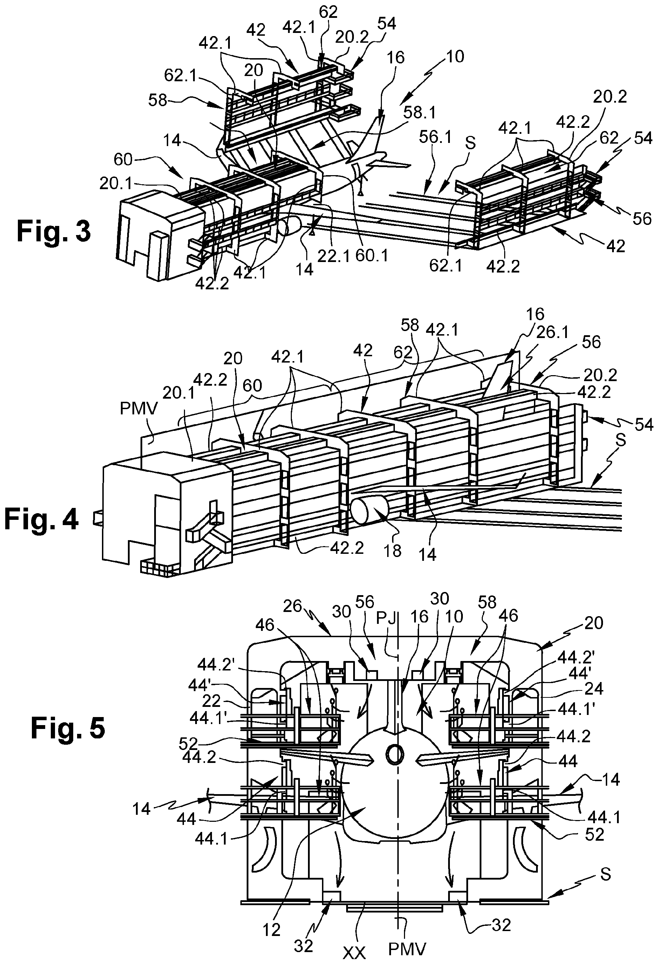

Comme illustré sur la figure 5, une installation de peinture adaptée pour peindre un aéronef 10 comprend une cabine de peinture 20 située, à l'intérieur d'un bâtiment, sur une plate-forme S (comme le sol) configurée pour permettre à un aéronef à peindre d'y stationner, ladite cabine de peinture 20 comportant des première et deuxième parois latérales 22, 24 parallèles entre elles ainsi qu'une paroi supérieure 26 distante de la plate-forme S, sensiblement parallèle à la plateforme S et reliant les première et deuxième parois latérales 22, 24. Le bâtiment dans lequel est positionnée la cabine de peinture 20 est dimensionné de manière à permettre à un aéronef d'y pénétrer. La cabine de peinture 20 en forme de tunnel sépare une zone intérieure située entre lesdites parois 22, 24, 26 et la plate-forme S et une zone extérieure. La cabine de peinture 20 s'étend entre des première et deuxième extrémités 20.1, 20.2. Selon un agencement, la paroi supérieure 26 est sensiblement horizontale et les première et deuxième parois latérales 22, 24 sont sensiblement verticales.

Bien entendu, l'invention n'est pas limitée à l'opération de peinture. Ainsi, l'installation de peinture peut être utilisée pour réaliser des opérations préparatoires à l'opération de peinture comme une opération d'inspection initiale, de ponçage, de nettoyage, de masquage par exemple et/ou des opérations ultérieures comme des opérations de décoration, d'inspection finale par exemple.

De plus, l'installation de peinture peut ne pas comprendre de bâtiment. Dans ce cas, la cabine de peinture 20 est située sur une plate-forme S située à l'air libre (à l'extérieur d'un bâtiment). Pour la suite de la description, une direction longitudinale est une direction horizontale (sensiblement parallèle à la plate-forme S) et sensiblement parallèle aux première et deuxième parois latérales 22, 24. Un plan médian vertical PMV est un plan vertical, parallèle à la direction longitudinale, positionné à équidistance des première et deuxième parois latérales 22, 24. Un plan transversal est un plan vertical et perpendiculaire au plan médian vertical PMV. Une direction transversale est une direction horizontale et perpendiculaire à la direction longitudinale.

Les parois 22, 24, 26 sont rigides et présentent une longueur (dimension prise selon la direction longitudinale) supérieure ou égale à la longueur du fuselage 12 de manière à ce que le fuselage 12 de l'aéronef puisse contenir dans la zone intérieure délimitée par la cabine de peinture 20.

Selon une particularité, les première et deuxième parois latérales 22, 24 comprennent des première et deuxième ouvertures latérales 22.1, 24.1 dimensionnées pour permettre aux ailes 14 de traverser les première et deuxième parois latérales 22, 24, en laissant un faible jeu autour des ailes 14. Grâce à ces ouvertures latérales 22.1, 24.1, les première et deuxième parois latérales 22, 24 sont rapprochées du fuselage 12, ce qui permet de réduire le volume de la zone intérieure dans laquelle est positionné le fuselage 12. Selon un agencement, le fuselage 12 est centré approximativement entre les première et deuxième parois latérales 22, 24. Selon une configuration, les première et deuxième parois latérales 22, 24 sont espacées d'une distance comprise entre 1,5 et 3 fois la largeur du fuselage. Généralement, chaque première ou deuxième paroi latérale 22, 24 est positionnée entre le fuselage 12 et l'ensemble de propulsion 18 le plus proche du fuselage 12.

Selon un mode de réalisation, pour au moins une des première et deuxième ouvertures latérales 22.1, 24.1, la cabine de peinture 20 comprend au moins une barrière souple, comme un rideau par exemple, solidaire de la première ou deuxième paroi latérale 22, 24 et configurée pour combler l'espace entre la première ou deuxième paroi latérale 22, 24 et l'aile 14, et ainsi totalement obturer la première ou deuxième ouverture latérale 22.1, 24.1. Selon une configuration, l'installation de peinture comprend au moins une barrière souple au niveau de chacune des première et deuxième ouvertures latérales 22.1, 24.1.

Selon un mode de réalisation visible notamment sur la figure 4, la paroi supérieure 26 comprend une ouverture supérieure 26.1 dimensionnée pour permettre à l'empennage 16, et plus particulièrement à sa partie verticale 16.1, de traverser la paroi supérieure 26 en laissant un faible jeu autour de l'empennage 16. Grâce à cette ouverture supérieure 16.1, la paroi supérieure 26 peut être rapprochée du fuselage 12, ce qui permet de réduire le volume de la zone intérieure dans laquelle est positionné le fuselage 12. Pour donner un ordre de grandeur, la paroi supérieure 26 est séparée de la plate-forme S d'une distance comprise entre 1,5 et 3 fois la hauteur du fuselage 12 (dimension prise selon une direction verticale).

Selon une configuration, la cabine de peinture 20 comprend au moins une barrière souple, comme un rideau par exemple, solidaire de la paroi supérieure 26 et configurée pour combler l'espace entre la paroi supérieure 26 et l'empennage 16, et ainsi totalement obturer l'ouverture supérieure 26.1.

Bien entendu, l'invention n'est pas limitée à ces modes de réalisation pour la cabine de peinture. Ainsi, les parois 22, 24, 26 pourraient ne pas être rigides. Quel que soit le mode de réalisation, la cabine de peinture 20 comprend au moins des première et deuxième ouvertures latérales 22.1, 24.1 configurées pour permettre aux ailes de l'aéronef de traverser la cabine de peinture 20. Cette solution permet d'obtenir une cabine de peinture 20 avec une section transversale réduite. Selon une configuration, la cabine de peinture 20 comprend une ouverture supérieure 26.1 dimensionnée pour permettre à l'empennage 16 de traverser la cabine de peinture 20. Cette dernière présente une forme en tunnel (formé par exemple par les parois 22, 24, 26) de longueur supérieure ou égale à celle du fuselage 12 et de largeur inférieure à trois fois la largeur du fuselage 12.

Le fait de prévoir une cabine de peinture 20 de petites sections, adaptées à celles du fuselage, permet de réduire le volume d'air à traiter par un système de ventilation et d'extraction, à chauffer pour le séchage de la peinture, ce qui permet de réduire la consommation d'énergie pour le traitement de l'air et le séchage. Le fait de réduire le volume d'air présent dans la cabine de peinture 20 permet également de faciliter et d'optimiser la gestion des caractéristiques (température, hygrométrie, qualité, ...) de l'air.

L'installation de peinture comprend au moins un système de ventilation et d'extraction 28 comportant au moins une bouche de ventilation 30 configurée pour injecter un gaz (notamment de l'air) dans la cabine de peinture 20 et positionnée au niveau d'une première zone de la cabine de peinture 20 ainsi qu'au moins une bouche d'extraction 32 configurée pour extraire le gaz (notamment l'air) présent dans la cabine de peinture 20, positionnée au niveau d'une deuxième zone de la cabine de peinture 20 opposée à la première zone. Selon un agencement, le système de ventilation et d'extraction 28 comprend plusieurs bouches de ventilation 30 régulièrement réparties entre les première et deuxième extrémités 20.1, 20.2 de la cabine de peinture 20 et/ou plusieurs bouches d'extraction 32 régulièrement réparties entre les première et deuxième extrémités 20.1, 20.2 de la cabine de peinture 20.

Le système de ventilation et d'extraction 28 peut comprendre au moins un système de régulation permettant de contrôler le débit du gaz sortant des bouches de ventilation 30 et/ou entrant dans les bouches d'extraction 32, la température et/ou l'hygrométrie du gaz sortant des bouches de ventilation 30 ou tout autre caractéristiques du gaz sortant des bouches de ventilation 30 et/ou entrant dans les bouches d'extraction 32.

Le fait de combiner une cabine de peinture 20 de petites dimensions, ajustées à celles du fuselage, et un système de ventilation et d'extraction 28 permet d'obtenir des flux laminaires (non perturbés) autour du fuselage 12, ce qui évite le maintien en suspension de particules de peinture et limite les phénomènes de dépôt de peinture sur les parois de la cabine de peinture 20 et par la suite de détachement de particules susceptibles de s'incruster sur la peinture fraîche et de dégrader la qualité du revêtement de peinture.

Bien entendu, l'invention n'est pas limitée à l'air comme gaz. Ainsi, le gaz pourrait être de l'azote ou un mélange d'air enrichi en azote afin de réduire la concentration en oxygène. Cette solution permet de réduire ou supprimer les risques d'explosion et d'incendie. De plus, dans ces conditions, l'application de peinture est moins sensible aux conditions de température et d'hygrométrie.

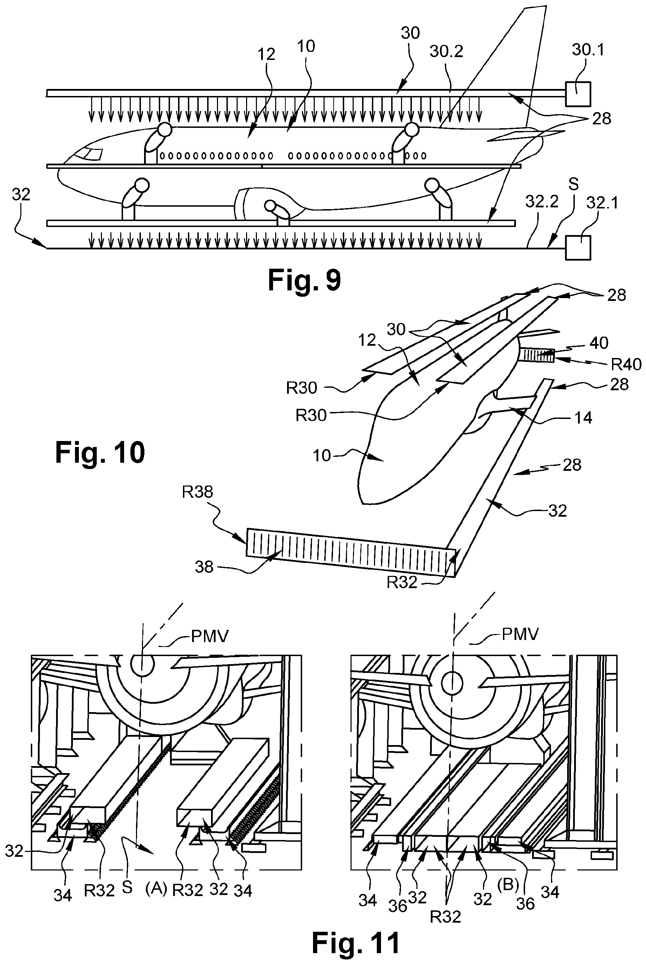

Selon une configuration, les bouches de ventilation et d'extraction 30, 32 sont positionnées au niveau ou à proximité de la paroi supérieure 26 et de la plate-forme S. Selon un agencement, les bouches de ventilation 30 sont positionnées au niveau ou à proximité de la paroi supérieure 26 et les bouches d'extraction 32 sont positionnées au niveau ou à proximité de la plate-forme S, comme illustré sur la figure 9.

Bien entendu, l'invention n'est pas limitée à cet agencement. Ainsi, les bouches de ventilation et d'extraction 30, 32 pourraient être positionnées à chaque extrémité du fuselage de manière à générer un flux de gaz horizontal.

Selon un mode de réalisation, le système de ventilation et d'extraction 28 comprend au moins deux rangées R30 longitudinales de bouches de ventilation 30, symétriques par rapport au plan médian vertical PMV, qui s'étendent chacune de la première extrémité 20.1 de la cabine de peinture 20 jusqu'à sa deuxième extrémité 20.2. Selon une configuration, le système de ventilation et d'extraction 28 comprend au moins un générateur de flux d'air 30.1 ainsi que, pour chaque rangée R30 de bouches de ventilation 30, au moins un conduit de ventilation 30.2 qui s'étend parallèlement au plan médian vertical PMV et comprend une extrémité reliée au générateur de flux d'air 30.1, ledit conduit de ventilation 30.2 présentant une pluralité d'orifices et/ou de fentes qui forment les bouches de ventilation 30. Quelle que soit la configuration, les rangées R30 de bouches de ventilation 30 sont positionnées au-dessus du fuselage 12, en partie supérieure de la cabine de peinture 20 et le plus proche possible du plan médian vertical PMV, les rangées R30 de bouches de ventilation étant séparées d'une distance inférieure à la largeur du fuselage 12. En variante, le système de ventilation et d'extraction 28 peut comprendre plusieurs conduits de ventilation 30.2 reliés au même générateur de flux d'air 30.1.

Bien entendu, l'invention n'est pas limitée à ce mode de réalisation. Ainsi, le système de ventilation et d'extraction 28 peut ne comprendre qu'une seule rangée longitudinale de bouches de ventilation au droit du plan médian vertical PMV. En variante, le système de ventilation et d'extraction 28 peut comprendre deux rangées longitudinales principales de bouches de ventilation, symétriques par rapport au plan médian vertical PMV et proches de ce dernier, ainsi que deux rangées longitudinales secondaires de bouches de ventilation, symétriques par rapport au plan médian vertical PMV et écartées de ce dernier. De préférence, les deux rangées longitudinales principales génèrent un débit d'air important alors que les deux rangées longitudinales secondaires génèrent un débit d'air inférieur et contribuent à réduire l'apparition de flux tourbillonnants dans les angles supérieurs de la cabine de peinture 20.

Selon un mode de réalisation, le système de ventilation et d'extraction 28 comprend au moins deux rangées R32 longitudinales de bouches d'extraction 32, symétriques par rapport au plan médian vertical PMV, qui s'étendent chacune de la première extrémité 20.1 de la cabine de peinture 20 jusqu'à sa deuxième extrémité 20.2. Selon une configuration, le système de ventilation et d'extraction 28 comprend au moins un extracteur d'air 32.1 ainsi que, pour chaque rangée R32 de bouches d'extraction 32, au moins un conduit d'extraction 32.2 qui s'étend parallèlement au plan médian vertical PMV et comprend une extrémité reliée à l'extracteur d'air 32.1, ledit conduit d'extraction 32.2 présentant une pluralité d'orifices et/ou de fentes qui forment les bouches d'extraction 32. Quelle que soit la configuration, les rangées R32 de bouches d'extraction 32 sont positionnées au-dessous du fuselage 12, en partie inférieure de la cabine de peinture 20 et le plus proche possible du plan médian vertical PMV, les rangées R32 de bouches d'extraction 32 étant espacées d'une distance inférieure à la largeur du fuselage 12. En variante, le système de ventilation et d'extraction 28 peut comprendre plusieurs conduits d'extraction 32.2 reliés au même extracteur d'air 32.1.

Bien entendu, l'invention n'est pas limitée à ce mode de réalisation. Ainsi, le système de ventilation et d'extraction 28 peut ne comprendre qu'une seule rangée longitudinale de bouches d'extraction au droit du plan médian vertical PMV ou deux rangées accolées l'une contre l'autre au niveau du plan médian vertical. En variante, le système de ventilation et d'extraction 28 peut comprendre deux rangées longitudinales principales de bouches d'extraction, symétriques par rapport au plan médian vertical PMV et proches de ce dernier, ainsi que deux rangées longitudinales secondaires de bouches d'extraction, symétriques par rapport au plan médian vertical PMV et écartées de ce dernier.

Selon un agencement, chaque conduit d'extraction 32.2 est positionné sur la plate-forme S. Selon cet agencement, aucune infrastructure n'est intégrée dans la plate-forme S.

Selon une configuration visible sur la figure 11, au moins un des conduits d'extraction 32.2 est mobile entre une position rétractée, visible sur la partie (A) de la figure 11, dans laquelle il est écarté du plan médian vertical PMV et dégage un chemin de passage pour au moins un des trains d'atterrissage de l'aéronef 10 ainsi qu'une position déployée, visible sur la partie (B) de la figure 11, dans laquelle il est rapproché du plan médian vertical PMV et repose sur la plate-forme S. Selon une configuration, le système de ventilation et d'extraction 28 comprend deux conduits d'extraction 32.2 symétriques par rapport au plan médiant vertical et mobiles entre les positions rétractée et déployée, les deux conduits d'extraction 32.2 étant accolés l'un contre l'autre en position déployée. Cette configuration permet de positionner les bouches d'extraction 32 le plus proche possible du plan médian vertical PMV lorsque les conduits d'extraction 32.2 sont en position déployée tout en permettant le positionnement d'un aéronef 10 dans la cabine de peinture 20 lorsque les conduits d'extraction 32.2 sont en position rétractée et dégagent la plate-forme S. Selon un mode de réalisation, le système de ventilation et d'extraction 28 comprend, pour chaque conduit d'extraction 32.2, un support longitudinal 34 fixé sur la plate-forme S ainsi qu'une articulation 36 reliant le support longitudinal 34 et le conduit d'extraction 32.2.

Selon un mode de réalisation, chaque conduit d'extraction 32.2 est un conduit rigide tubulaire de section transversale carrée ou rectangulaire. A titre d'exemple, l'articulation 36 comprend deux biellettes qui présentent chacune une première extrémité reliée au support longitudinal 34 et une deuxième extrémité reliée au conduit d'extraction 32.2. Le système de ventilation et d'extraction 28 peut comprendre au moins une motorisation pour provoquer le déplacement de chaque conduit d'extraction 32.2 entre les positions rétractée et déployée. Selon un mode de réalisation visible sur la figure 10, le système de ventilation et d'extraction 28 comprend au moins une bouche d'extraction d'extrémité 38 positionnée au niveau de la première extrémité 20.1 de la cabine de peinture 20. Selon un agencement, le système de ventilation et d'extraction 28 comprend au moins une rangée R38 de bouches d'extraction d'extrémité 38 perpendiculaire au plan médian vertical PMV et positionnée au niveau de la première extrémité 20.1 de la cabine de peinture 20.

Selon un mode de réalisation visible sur la figure 10, le système de ventilation et d'extraction 28 comprend au moins une bouche d'extraction d'extrémité 40 positionnée au niveau de la deuxième extrémité 20.2 de la cabine de peinture 20. Selon un agencement, le système de ventilation et d'extraction 28 comprend au moins une rangée R40 de bouches d'extraction d'extrémité 40 perpendiculaire au plan médian vertical PMV et positionnée au niveau de la deuxième extrémité 20.2 de la cabine de peinture 20.

Le fait de positionner des bouches d'extraction d'extrémité 38, 40 au niveau des première et deuxième extrémités 20.1, 20.2 de la cabine de peinture 20 permet d'éviter l'apparition de flux tourbillonnants en raison de la forme conique des pointes avant et arrière 12.1, 12.2 du fuselage 12.

La cabine de peinture 20 comprend au moins une structure 42 (visible sur les figures 3 et 4) supportant les première et deuxième parois latérales 22, 24 ainsi que la paroi supérieure 26. Selon un mode de réalisation, la structure 42 comprend des cadres 42.1 positionnés dans des plans transversaux ainsi que des longerons 42.2 reliant les cadres 42.1 entre eux, orientés parallèlement à la direction longitudinale. Bien entendu, l'invention n'est pas limitée à cette configuration pour la structure 42.

Selon un mode de réalisation, la cabine de peinture 20 comprend plusieurs glissières longitudinales 44 solidaires de la structure 42, parallèles entre elles et à la direction longitudinale, positionnées de part et d'autre du plan médian vertical PMV. Selon un agencement visible sur la figure 5, la structure 42 comprend, de part et d'autre du plan médian vertical PMV, plusieurs glissières longitudinales 44, 44' décalées en hauteur. A titre d'exemple, la structure 42 comprend deux glissières longitudinales 44, 44' de chaque côté du plan médian vertical PMV. Selon une configuration, chaque glissière longitudinale 44, 44' comprend deux rails longitudinaux 44.1, 44.2, 44.1', 44.2' décalés en hauteur.

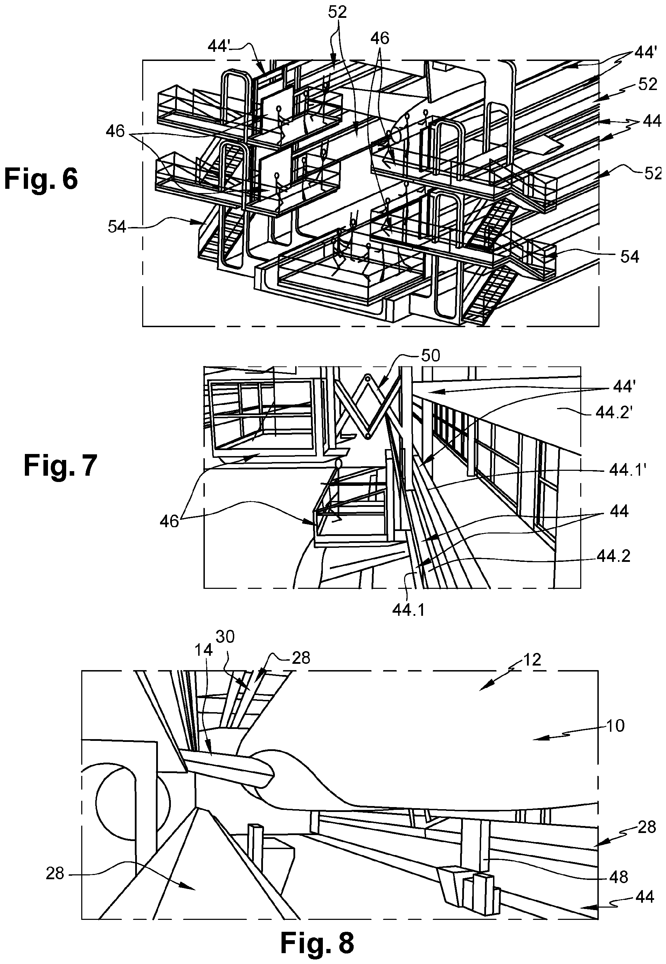

Chaque glissière 44, 44' est configurée pour permettre à au moins un support, comme une nacelle 46 (visible sur la figure 7) ou un chariot 48 (visible sur la figure 8), de se déplacer le long du fuselage 12 positionné dans la cabine de peinture 20 en coulissant le long de la glissière 44, 44'. Selon un agencement visible sur la figure 7, la nacelle 46 peut être reliée à la glissière 44 par au moins une liaison 50 télescopique configurée pour déplacer la nacelle 46 par rapport à la glissière 44, 44' selon une direction transversale.

Chaque glissière 44, 44' peut comprendre plusieurs tronçons positionnés bout à bout.

La cabine de peinture 20 peut comprendre des galeries 52 réparties sur plusieurs niveaux et configurées pour permettre aux opérateurs de se déplacer autour du fuselage 12, ainsi que des escaliers et/ou des ascenseurs 54 pour passer d'une galerie 52 à l'autre.

Selon un mode de réalisation, la cabine de peinture 20 comprend au moins des première et deuxième parties 56, 58 comportant respectivement au moins une partie des première et deuxième parois latérales 22, 24, au moins une des première et deuxième parties 56, 58 étant mobile entre une position écartée, correspondant à un état ouvert de la cabine de peinture 20, comme illustré sur les figures 1 à 3, dans laquelle un fuselage d'un aéronef peut être positionné entre les première et deuxième parties 56, 58 ainsi qu'une position rapprochée, correspondant à un état fermé de la cabine de peinture 20, comme illustré sur les figures 4 et 5.

La première partie 56 comprend au moins une partie de la première paroi latérale 22 ainsi qu'une première portion de la paroi supérieure 26. La deuxième partie 58 comprend au moins une partie de la deuxième paroi latérale 24 ainsi qu'une deuxième portion de la paroi supérieure 26, les première et deuxième portions de la paroi latérale étant jointives le long d'un plan de jonction PJ (visible sur la figure 5) lorsque les première et deuxième parties 56, 58 sont rapprochées et la cabine de peinture 20 est à l'état fermé.

Selon une configuration, les première et deuxième parties 56, 58 sont sensiblement symétriques par rapport au plan médian vertical PMV. Dans ce cas, le plan de jonction PJ est confondu avec le plan médian vertical PMV lorsque les première et deuxième parties 56, 58 sont rapprochées. Selon cette configuration, les première et deuxième portions de la paroi supérieure 26 comprennent des découpes 26.2, 26.3 de manière à former l'ouverture supérieure 26.1 lorsque les première et deuxième parties 56, 58 sont rapprochées.

Selon un mode de réalisation, les première et deuxième parties 56, 58 sont mobiles entre les états ouvert et fermé.

Selon une configuration, l'installation de peinture comprend, pour chacune des première et deuxième parties 56, 58, au moins une liaison glissière 56.1, 58.1 reliant la première ou deuxième partie 56, 58 et la plate-forme S, configurée pour permettre à la première ou deuxième partie 56, 58 de se translater entre les états ouvert et fermé.

En fonctionnement, lorsque le fuselage 12 de l'aéronef 10 à peindre est positionné dans la cabine de peinture 20, l'axe longitudinal aéronef XX est positionné sensiblement dans le plan médian vertical PMV. Pour réduire les dimensions des ouvertures latérales 22.1, 24.1, chaque liaison glissière 56.1, 58.1 forme avec le plan médian vertical PMV un angle sensiblement égal à celui formé entre le fuselage 12 et chaque aile 14. Selon un mode de réalisation, chaque liaison glissière 56.1, 58.1 comprend plusieurs rails parallèles entre eux formant un angle sensiblement égal à celui formé entre le fuselage 12 et l'aile 14 correspondante. Ainsi, lorsque l'aéronef est positionné pour être peint, les rails associés à la première ou deuxième partie 56, 58 sont sensiblement parallèles au bord de fuite 14.1 de l'aile 14 qui coopère avec la première ou deuxième partie 56, 58 correspondante.

Selon une configuration, l'installation de peinture comprend, pour chacune des première et deuxième parties 56, 58, au moins une motorisation pour déplacer les première et deuxième parties 56, 58.

Selon un mode de réalisation visible sur les figures 1 à 4, la cabine de peinture 20 comprend un premier tronçon 60 configuré pour loger la partie avant 12A ainsi qu'un deuxième tronçon 62 configuré pour loger la partie arrière 12B. Les premier et deuxième tronçons 60, 62 comprennent respectivement des première et deuxième faces terminales 60.1, 62.1 positionnées dans des plans transversaux. Au moins un des premier et deuxième tronçons 60, 62 est mobile entre une première position, correspondant à l'état fermé de la cabine de peinture 20, dans laquelle les première et deuxième faces transversales 60.1, 62.1 sont plaquées l'une contre l'autre ainsi qu'une deuxième position, correspondant à l'état ouvert de la cabine de peinture 20, dans laquelle les première et deuxième faces transversales 60.1, 62.1 sont écartées.

Selon une configuration, le premier tronçon 60 est fixe. En complément, le deuxième tronçon 62 comprend des première et deuxième parties 56, 58 mobiles entre une position écartée du plan médian vertical correspondant à l'état ouvert de la cabine de peinture 20 (visible sur les figures 1 à 3) et une position rapprochée du plan médian vertical correspondant à l'état fermé de la cabine de peinture 20 (visible sur la figure 4). Cette configuration permet de limiter les dimensions des pièces en mouvement et leur course.

Selon un agencement, le premier tronçon 60 comprend les ouvertures latérales 22.1, 24.1 qui débouchent au niveau de la première face terminale 60.1. En variante, les ouvertures latérales 22.1, 24.1 sont situées sur le deuxième tronçon 62 ou à cheval sur les premier et deuxième tronçons 60, 62.

Selon un mode opératoire, le fuselage 12 de l'aéronef 10 est peint lors d'une première phase puis les ailes 14 et l'empennage 16 sont peints lors d'une deuxième phase.

Comme illustré sur la figure 1, les première et deuxième parties 56, 58 du deuxième tronçon 62 étant en position écartée, un aéronef 10 à peindre est déplacé de manière à introduire sa partie avant 12A dans le premier tronçon 60, comme illustré sur les figures 2 et 3. En suivant, les première et deuxième parties 56, 58 sont déplacées pour fermer la cabine de peinture 20 comme illustré sur les figures 4 et 5.

Bien entendu, l'invention n'est pas limitée au mode de réalisation décrit sur les figures 1 à 5 pour la cabine de peinture 20. D'autres solutions sont envisageables pour obtenir une cabine de peinture 20 de petites dimensions permettant de confiner le fuselage 12 à peintre dans un volume réduit. Ainsi, les première et deuxième parties 56, 58 pourraient s'étendre de la première extrémité 20.1 de la cabine de peinture jusqu'à sa deuxième extrémité 20.2. Quel que soit le mode de réalisation, la cabine de peinture 20 comprend au moins deux éléments, à savoir les première et deuxième parties 56, 58 et/ou les premier et deuxième tronçons 60, 62 ; au moins l'un des deux éléments étant mobile entre une position rapprochée, correspondant à l'état fermé de la cabine de peinture 20, dans laquelle les deux éléments sont jointifs ainsi qu'une position écartée, correspondant à l'état ouvert de la cabine de peinture 20, dans laquelle un fuselage d'un aéronef peut être positionné entre les deux éléments.

## Revendications

1. Installation de peinture adaptée pour peindre un fuselage (12) d'un aéronef, l'aéronef comportant des ailes (14) et un empennage (16), chaque aile (14) formant un angle donné avec le fuselage (12), l'installation de peinture comportant une plate-forme (S) ; **caractérisée en ce que** l'installation de peinture comprend une cabine de peinture (20), positionnée sur la plate-forme (S), comportant au moins des première et deuxième ouvertures latérales (22.1, 24.1) configurées pour permettre aux ailes (14) de l'aéronef de traverser la cabine de peinture (20) ainsi qu'au moins deux éléments (56, 58, 60, 62), au moins l'un des deux éléments (56, 58, 60, 62) étant mobile entre une position rapprochée, correspondant à un état fermé de la cabine de peinture (20), dans laquelle les deux éléments (56, 58, 60, 62) sont jointifs ainsi qu'une position écartée correspondant à un état ouvert de la cabine de peinture (20), dans laquelle le fuselage (12) peut être positionné entre les deux éléments (56, 58, 60, 62).

2. Installation de peinture selon la revendication précédente, **caractérisée en ce que** la cabine de peinture (20) comprend une ouverture supérieure (26.1) dimensionnée pour permettre à l'empennage (16) de traverser la cabine de peinture (20).

3. Installation de peinture selon la revendication précédente, **caractérisée en ce que** la cabine de peinture (20) comprend au moins des première et deuxième parties (56, 58), la première partie (56) comportant au moins une partie d'une première paroi latérale (22) ainsi qu'une première portion d'une paroi supérieure (26), la deuxième partie (58) comportant au moins une partie d'une deuxième paroi latérale (24) ainsi qu'une deuxième portion de la paroi supérieure (26), les première et deuxième portions de la paroi supérieure (26) étant jointives lorsque les première et deuxième parties (56, 58) sont dans la position rapprochée, les première et deuxième portions de la paroi supérieure (26) comprenant des découpes (26.2, 26.3) de manière à former l'ouverture supérieure (26.1) lorsque les première et deuxième parties (56, 58) sont dans la position rapprochée.

4. Installation de peinture selon la revendication précédente, **caractérisée en ce que** les première et deuxième parties (56, 58) sont mobiles entre les positions rapprochée et écartée et symétriques par rapport à un plan médian vertical (PMV).

5. Installation de peinture selon la revendication précédente, **caractérisée en ce que** l'installation de peinture comprend, pour chacune des première et deuxième parties (56, 58), au moins une liaison glissière (56.1, 58.1) reliant la première ou deuxième partie (56, 58) et la plate-forme (S) et configurée pour permettre à la première ou deuxième partie (56, 58) de se translater entre les positions rapprochée et écartée, chaque liaison glissière (56.1, 58.1) formant avec le plan médian vertical (PMV) un angle sensiblement égal à celui formé entre le fuselage (12) et chaque aile (14).

6. Installation de peinture selon l'une des revendications 4 à 5, **caractérisée en ce que** la cabine de peinture (20) comprend des premier et deuxième tronçons (60, 62) comportant respectivement des première et deuxième faces terminales (60.1, 62.1) positionnées dans des plans transversaux perpendiculaires au plan médian vertical (PMV), au moins un des premier et deuxième tronçons (60, 62) étant mobile entre une première position dans laquelle les première et deuxième faces transversales (60.1, 62.1) sont plaquées l'une contre l'autre ainsi qu'une deuxième position dans laquelle les première et deuxième faces transversales (60.1, 62.1) sont écartées.

7. Installation de peinture selon la revendication précédente, **caractérisée en ce que** le premier tronçon (60) est fixe et **en ce que** le deuxième tronçon (62) comprend les première et deuxième parties (56, 58) mobiles entre une position écartée du plan médian vertical (PMV) et une position rapprochée du plan médian vertical (PMV).

8. Installation de peinture selon la revendication précédente, **caractérisée en ce que** le premier tronçon (60) comprend les première et deuxième ouvertures latérales (22.1, 24.1) débouchant au niveau de la première face terminale (60.1).

9. Installation de peinture selon l'une des revendications 2 à 8, **caractérisée en ce que** la cabine de peinture (20) comprend au moins une barrière souple configurée pour combler un espace entre la cabine de pilotage (20) et l'empennage (16), et ainsi totalement obturer l'ouverture supérieure (26.1).

10. Installation de peinture selon l'une des revendications précédentes, **caractérisée en ce que**, pour au moins une des première et deuxième ouvertures latérales (22.1, 24.1), la cabine de peinture (20) comprend au moins une barrière souple configurée pour combler un espace entre la cabine de peinture (20) et l'aile (14) et ainsi totalement obturer la première ou deuxième ouverture latérale (22.1, 24.1).

11. Installation de peinture selon l'une des revendications 3 à 8, **caractérisée en ce que** la cabine de peinture (20) comprend une structure (42) configurée pour supporter des parois (22, 24, 26) ainsi que plusieurs glissières longitudinales (44) solidaires de la structure (42), parallèles entre elles et configurées pour permettre à au moins un support de se déplacer le long du fuselage (12) positionné dans la cabine de peinture (20) en coulissant le long de la glissière (44, 44').
